# EUROPÄISCHE PATENTSCHRIFT

(11) **EP 3 043 972 B1**
(45) Veröffentlichungstag und Bekanntmachung des Hinweises auf die Patenterteilung: **23.08.2017**
(21) Anmeldenummer: 14780781.2
(22) Anmeldetag: 08.09.2014
(51) Int. Cl.: C01B 32/956, C09K 3/14, B09B 3/00

(54) **VERFAHREN ZUM RECYCLING VON PULVERFORMIGEN SILICIUMCARBID-ABFALLPRODUKTEN**
METHOD FOR RECYCLING OF SILICON CARBIDE POWDER WASTE PRODUCTS
PROCÉDÉ POUR LE RECYCLAGE DE DECHETS PULVÉRULENTS DE CARBURE DE SILICIUM

(30) Priorität: 14.09.2013 DE 102013218450
(43) Veröffentlichungstag der Anmeldung: 20.07.2016
(73) Patentinhaber: Fraunhofer-ges. zur Förderung der Angewandten Forschung E.V., 80686 München (DE)
(72) Erfinder: ADLER, Jörg, 01662 Meissen (DE); HEYMER, Heike, 01217 Dresden (DE); THIEME, Peter, 01705 Pesterwitz (DE); MAYER-UHMA, Tobias, 02627 Hochkrich (DE); SCHICHT, Thomas, 01454 Wachau (DE)
(74) Vertreter: Rauschenbach, Marion
(86) Internationale Anmeldenummer: PCT/EP2014/069105
(87) Internationale Veröffentlichungsnummer: WO 2015/036371

(56) Entgegenhaltungen:
- EP-A1- 0 022 522
- EP-A1- 0 052 850
- EP-A1- 0 052 851
- WO-A2-2009/126922
- DE-A1-102012 012 227
- GB-A- 2 016 524
- JP-A- 2001 130 909
- US-A1- 2010 189 622

## Beschreibung

Die Erfindung bezieht sich auf das Gebiet der Technischen Keramik und betrifft ein Verfahren zum Recycling von pulverförmigen Siliciumcarbid-Abfallprodukten, wie es beispielweise in Schleifschlämmen oder im herstellungsbedingten Abfall an Siliciumcarbid anfällt.

Siliciumcarbid (SiC) ist ein synthetisches Industriemineral, das wegen seiner herausragenden Eigenschaften (Härte, Hochtemperatureigenschaften, chemische Beständigkeit) in vielen Industriebranchen eingesetzt wird. Von besonderer Bedeutung ist sein Einsatz in Form spezieller, hochreiner und eng fraktionierter Feinstpulverkörnungen (0,5 bis ca. 250 µm) in der Mikroelektronik/Photovoltaik (Wafersägen), zur Herstellung von ballistischer Schutzkeramik für die Militärtechnik, der Automobil-/Umwelttechnik (Dieselpartikelfilter), sowie als Abrasivstoff für hochwertige Oberflächenbearbeitung im gesamten Maschinenbau. SiC-Pulverkörnungen werden aus speziellem Roh-SiC durch Mahlung, Reinigung und Fraktionierung hergestellt. Dabei fallen hohe und konstante Mengen an geringwertigem, schlecht verwertbarem SiC an. Eine Bedarfssteigerung bei den Körnungen erfordert so immer eine Roh-SiC-Produktionssteigerung. Insofern ist eine Erhöhung der Roh-Kapazität nicht lukrativ für die Produzenten, was zu struktureller Knappheit und Preisinelastizität führt.

Die Roh-SiC-Erzeugung über den seit ca. 120 Jahren angewendeten Elektrosyntheseprozess, den sogenannten Acheson-Prozess (DE 76629 A, DE 85197 A), ist an den Strom- und Ölpreis (Rohstoff Petrolkoks), sowie die Umweltkosten (wegen hoher Staub-, CO/CO₂- und SO₂-Emissionen) gebunden. Alternative Herstellungsverfahren sind trotz vieler Versuche zumeist aus wirtschaftlichen Gründen nicht erfolgreich gewesen und stehen auch in absehbarer Zeit nicht zur Verfügung

Obwohl SiC als ein weltweit verfügbarer Massenrohstoff gilt, sind bei den strategisch wichtigen hochqualitativen Körnungen (HQ) schon seit Jahren Engpässe und Preissteigerungen zu verzeichnen. 2008 wurde ein Defizit von 40-60.000 t an HQ-SiC-Rohmaterial in Europa geschätzt (Silicon Carbide & More #24, 2008, S. 3). Ein noch größeres Problem der Spezialkörnungen ist aber, dass in den High-Tech-Anwendungen große Mengen einzelner Korngrößenbänder benötigt werden. Beides führt aufgrund der o.a. Zusammenhänge der Preisinelastizität zu Preisaufschlägen und Versorgungsengpässen für diese HQ-Spezialkörnungen.

SiC-Pulver in abrasiven Anwendungen unterliegen einem Verschleiß hinsichtlich der Schneidleistung und Korngröße. Ein Großteil des SiC geht durch dissipative Vorgänge verloren. In vielen Fällen, bei denen SiC-haltige Abprodukte erfassbar sind, ist die stoffliche Trennung technisch extrem schwierig und die Aufbereitung wirtschaftlich nicht lohnend.

Seit dem industriellen Sägen von Wafern aus Silicium-Ingots fallen dagegen sehr große Mengen von verunreinigten SiC-Schleifschlämmen an. Die sogenannte SiC-Sägeslurry ist eine dickflüssige Suspension aus SiC und Polyethylenglykol (PEG). Siliciumcarbid als pulverartiger fester Bestandteil ist verantwortlich für die Härte und Sägeleistung - Polyethylenglykol (PEG) als flüssiger Bestandteil ist Träger und Kühlmittel. Durch den Sägevorgang verändert sich die Korngrößenverteilung und die Suspension wird verunreinigt. Um die Slurry wieder einsetzen zu können, muss diese gereinigt und aufbereitet werden. Dafür ist in den letzten Jahren eine Erfassungslogistik und Aufbereitungstechnik entstanden, die bis zu 80% des SiC zurückgewinnt und in den Nutzungskreislauf zurückführt. Die verbleibenden Restschlämme bestehen aus verschlissenem, d.h. zu feinkörnigem SiC-Pulver, Waferabrieb (Si), Sägedrahtabrieb (metallischen Verunreinigungen, z.B. Fe, Cr, V) und z.T. Filterhilfsmitteln, wie Kieselgur, welches chemisch größtenteils aus SiO₂ besteht, oder Perlit.

Trenn- und Reinigungsverfahren für solche Mischungen existieren zwar (WO 2009/126922 A2 und US 2010/189622 A1), aber die Verwertung des Restschlamm-SiCs für hochqualitative Anwendungen scheitert an der zu geringen Korngröße und Schneidleistung, so dass gegenwärtig nur Downcycling oder Deponierung praktiziert wird. Gereinigte SiC/Si Pulver aus Säge-Restschlämmen werden beispielsweise für die Herstellung von minderwertiger reaktions- oder nitridgebundener SiC-Keramik angeboten (WO 02/40407 A1); allerdings ist der Bedarf an solchen Produkten gering. Daher wird der Großteil der Restschlämme gegenwärtig in der Metallurgie als Zuschlagstoff eingesetzt oder deponiert.

Das Wachstum von SiC durch sogenanntes Rekristallisieren ist als Verfahren prinzipiell bekannt (J. Kriegesmann, Keramische Zeitschrift 42 (1990) 7, S. 481-484) und verläuft als Sublimation/Rekondensationsprozess, vermutlich über die Gleichgewichtsreaktion SiC+SiO (g) ↔ 2 Si (g)+ CO, im Endstadium der Roh-SiCHerstellung auch im Inneren der Acheson-Walze. Dieser Vorgang wird auch bei der Herstellung von sogenannten RSiC-Keramik genutzt, bei der geformte Erzeugnisse aus HQ-Pulvermischungen einer Wärmebehandlung bei Temperaturen von ca. 2400°C unter Schutzgas unterzogen werden (u.a. US 650234 B). Dabei sublimiert Feinkorn und bindet das gleichzeitig miteinander verwachsende Grobkorn zu einem festen, porösen Gerüst. Nach DE 1186447 A ist ein zweistufiger Prozess zur Synthese von Siliciumcarbid bekannt, bei dem im zweiten Prozessschritt eine vorreagierte Rohmischung brikettiert wird und danach einer Hochtemperatur-Wärmebehandlung unterzogen wird, wobei die SiC-Partikel gereinigt und vergröbert werden.

Sowohl beim Acheson-Prozess, als auch bei der Herstellung von RSiC-Keramik entsteht jedoch eine starke Bindung und Verwachsung der SiC-Partikel über mindestens Millimeter, z.T. sogar Meterdimensionen, so dass kein verwendungsfähiges Pulver mit vereinzelten Sub-Millimeter-großen Partikeln direkt aus dem Prozess gewonnen werden können, sondern das Material klassiert, gebrochen und aufwändig gemahlen und klassiert werden muss (K.-H. Mehrwald, cfi/Ber. DKG 69 (1992) No 3, S72-81).

Bekannt ist auch, dass bei der Kristallzüchtung von SiC-Kristallen bei hohen Temperaturen große Kristalle über Gasphasenprozesse auf Substrate, z.B. Graphit oder SiC-Keramik aufwachsen. Hierbei entstehen ebenfalls keine losen Kristallpartikel, sondern die erwünschten großen SiC-Einkristalle, die vom Substrat mit mechanischen oder chemischen Mitteln abgelöst werden müssen.

Nachteilig bei den bekannten Lösungen des Standes der Technik ist, dass insbesondere SiC-Abfallprodukte aufgrund ihrer geringen Partikelgröße nicht wiedereinsetzbar sind für bekannte Produkte und Prozesse.

Aufgabe der vorliegenden Erfindung ist es, ein Verfahren zum Recycling von pulverförmigen Siliciumcarbid-Abfallprodukten anzugeben, mit dem die pulverförmigen SiC-Abfallprodukte mit einem einfachen und wirtschaftlichen Verfahren wiedereinsetzbar für bekannte Produkte und Prozesse gemacht werden.

Die Aufgabe wird durch die in den Ansprüchen angegebene Erfindung gelöst. Vorteilhafte Ausgestaltungen sind Gegenstand der Unteransprüche.

Bei dem erfindungsgemäßen Verfahren zum Recycling von pulverförmigen Siliciumcarbid-Abfallprodukten werden pulverförmige SiC-Abfallprodukte, die mindestens 50 Ma.-% SiC und eine mittlere Korngrößen d₅₀, gemessen über Laserbeugung, zwischen 0,5 bis 500 µm aufweisen, einer Temperaturbehandlung unter Vakuum oder sauerstofffreier Atmosphäre bei Temperaturen von mindestens 2000 °C unterzogen.

Vorteilhafterweise werden als pulverförmige Siliciumcarbid-Abfallprodukte sogenannte Restschlamm-SiC aus Si-Bearbeitungsprozessen, Schleifschlämme, Schleifstäube aus Oberflächenbearbeitungsprozessen, oder feinkörnige Fraktionen aus dem Herstellungsprozess von Roh-SiC eingesetzt.

Ebenfalls vorteilhafterweise wird die Temperaturbehandlung bei Temperaturen zwischen 2000 °C bis 2600 °C durchgeführt.

Weiterhin vorteilhafterweise wird die Temperaturbehandlung unter Argon- oder Stickstoffatmosphäre durchgeführt.

Und auch vorteilhafterweise werden die pulverförmigen SiC-Abfallprodukte bei der Temperatur von mindestens 2000 °C zwischen 10 und 300 min ausgesetzt.

Vorteilhaft ist es auch, wenn pulverförmige SiC-Abfallprodukte als Schüttung oder verdichtetes Pulver eingesetzt werden, die eine prozentuale Dichte, bezogen auf die Reindichte des Pulvers oder der Pulvermischung, von maximal 50 %, vorzugsweise zwischen 20 und 50 %, noch vorteilhafterweise zwischen 25 und 40 %, aufweisen.

Ebenfalls vorteilhaft ist es, wenn bekannte Hilfs- und Zusatzstoffe zur SiC-Rekristallisation zugegeben werden, die noch vorteilhafterweise als Eisen, Eisenverbindungen und/oder Eisenlegierungen in Anteilen von 0,25 - 5,00 Ma.-% Eisen, bezogen auf die Gesamtmenge an SiC und Si und C, zugegeben werden können.

Weiterhin vorteilhaft ist es, wenn den pulverförmigen SiC-Abfallprodukten der 0,3 bis 0,5 fache Gewichtsanteil an Kohlenstoff, bezogen auf den freien Si-Gehalt und/oder den Si-Gehalt des SiO₂, zugegeben wird, wobei noch vorteilhafterweise der Kohlenstoff in Form von Ruß oder Kokspulver zugegeben wird.

Erfindungsgemäß ist auch die Verwendung eines nach dem Verfahren zum Recycling von pulverförmigen Siliciumcarbid-Abfallprodukten hergestellten rekristallisierten pulverförmigen Siliciumcarbids für Bearbeitungsprozesse, für Oberflächenbearbeitungsprozesse, für ballistische Schutzkeramiken und/oder für Filtermaterialien.

Vorteilhafterweise erfolgt die Verwendung des erfindungsgemäß hergestellten rekristallisierten pulverförmigen Siliciumcarbids für das Sägen von Wafern und/oder das Schleifen und/oder Polieren von Oberflächen.

Weiterhin vorteilhafterweise erfolgt die Verwendung des erfindungsgemäß hergestellten rekristallisierten pulverförmigen Siliciumcarbids mit Zirkularitätswerten von 0,905 bis 0,925 und/oder Werten für die d₅₀-Reduktion im Härtetest von 41 bis 52%.

Mit der erfindungsgemäßen Lösung ist es erstmals möglich, pulverförmige SiC-Abfallprodukte mit einem einfachen und wirtschaftlichen Verfahren wiedereinsetzbar für bekannte Produkte und Prozesse zu machen.

Erreicht wird dies durch ein Verfahren zum Recycling von pulverförmigen SiC-Abfallprodukten, bei dem als Ausgangsstoffe pulverförmige SiC-Abfallprodukte eingesetzt werden, die mindestens 50 Ma.-% SiC und eine mittlere Korngrößen d₅₀, gemessen über Laserbeugung, zwischen 0,5 bis 500 µm aufweisen.
Derartige pulverförmige SiC-Abfallprodukte sind so feinkörnig, dass sie für die Herstellung von SiC-Produkten beispielsweise in High-Tech-Anwendungen nicht einsetzbar sind.

Dies können beispielsweise sogenannte Restschlamm-SiC aus Si-Bearbeitungsprozessen, Schleifschlämme, Schleifstäube aus Oberflächenbearbeitungsprozessen, oder feinkörnige Fraktionen aus dem Herstellungsprozess von Roh-SiC sein, oder auch Mischungen aus diesen Abfallprodukten sein.

Restschlamm-SiC aus Si-Bearbeitungsprozessen, z.B. beim industriellen Si-WaferSägen, wird auch als sogenanntes Koppelprodukt bezeichnet.

Als SiC-Abfallprodukt können auch hoch-SiC-haltige pulverförmige Rückstände aus der Aufbereitung gebrauchter Dieselpartikelfilter oder bei der Herstellung solcher Dieselpartikelfilter entstehende Abfälle eingesetzt werden.

Ebenso kann die vorliegende Erfindung genutzt werden, um auch feine Siliciumschlämme, die z.B. bei Si-Bearbeitungsprozessen ohne den Einsatz von SiC-Pulver entstehen, zu verwerten. Das ist der Fall, wenn anstelle von SiC als Schleifmittel Diamantpulver oder ein mit Diamant besetzter Draht eingesetzt wird. Hierzu wird diesem Silicium-haltigen Abfallpulver feines SiC-Pulver zugesetzt, bis die Mischung erfindungsgemäß > 50% an SiC enthält. Der in der Mischung enthaltene Anteil an Diamant dient dann gleichfalls als Kohlenstoffquelle und wird bei der Zudosierung der kohlenstoffhaltiger Pulver, wie Ruß oder Kokspulver, mengenmäßig berücksichtigt.

Derartige pulverförmige SiC-Abfallprodukte können als Pulver in lockerer Schüttung eingesetzt werden. Pulver mit einer geringen Verdichtung, wie sie produktionstechnisch und/oder durch die Lagerung der Pulver vorliegt, können erfindungsgemäß ebenfalls als Ausgangsstoffe eingesetzt werden. Wesentlich ist dabei, dass die Schüttung oder die verdichteten Pulver eine prozentuale Dichte, bezogen auf die Reindichte des Pulvers oder der Pulvermischung bis maximal 50 %, vorzugsweise zwischen 20 und 50 %, noch vorteilhafterweise zwischen 25 und 40%, aufweist. Die Herstellung einer Schüttung erfolgt typischerweise durch Einfüllen des losen Pulvers in einen Behälter oder durch Aufschütten auf eine Unterlage. Dabei kann ein Verteilen mit einfachen mechanischen Hilfsmitteln vorgenommen werden. Eine leichte Verdichtung kann z.B. durch Anwendung von Schwingungen, z.B. durch einen Rütteltisch oder durch Klopfen erreicht werden. Keinesfalls sollten zusätzliche Presskräfte aufgebracht werden.

Die Bestimmung der Dichte der Schüttung erfolgt durch Auswägung und Volumenbestimmung der Schüttung. Die Bestimmung der Reindichte des Pulvers erfolgt z.B. durch Gaspyknometrie, kann bei bekannter Zusammensetzung auch aus der bekannten Reindichte der Komponenten berechnet werden. Bei Siliciumcarbid beträgt die Reindichte 3,21 g/cm³.

Diese pulverförmigen SiC-Abfallprodukte werden dann erfindungsgemäß einer Temperaturbehandlung unter Vakuum oder sauerstofffreier Atmosphäre bei Temperaturen zwischen 2000°C und 2600°C unterzogen, wobei gröbere Ausgangspartikel tendenziell eine höhere Temperatur benötigen, als sehr feine Partikel. Unterhalb 2000°C kommt es dagegen kaum noch zu einer starken Partikelvergröberung. Oberhalb von 2600°C nimmt dagegen die Zersetzung des SiC so stark zu, dass der Prozess unwirtschaftlich wird.

Die Verweilzeiten liegen bei den genannten Temperaturen vorteilhafterweise zwischen 10 Minuten und 300 Minuten, wobei dies auch vom zu behandelnden Pulvervolumen und von der Temperatur abhängt.
Als sauerstofffreie Atmosphäre werden technische Schutzgasatmosphären, wie Argon- oder Stickstoff-Atmosphäre eingesetzt. Die Temperaturbehandlung ist sowohl unter leichtem Überdruck möglich, als auch unter Unterdruck, bis hin zu Vakuum. Vorteilhafterweise wird die Temperaturbehandlung unter Argon-Atmosphäre durchgeführt. Die thermische Behandlung ist sowohl in Batch-Öfen, als auch in kontinuierlichem Durchlaufbetrieb möglich.

Mit dem erfindungsgemäßen Verfahren wird ein Wachstum der SiC-Partikel erreicht und überraschenderweise, dass die entstandenen gröberen SiC-Partikel überwiegend vereinzelt in Pulverform vorliegen, so dass das Verfahrensprodukt im Wesentlichen keiner weiteren Behandlung hinsichtlich Mahlung und Reinigung unterzogen werden muss. Dies war überraschend, da ausgehend von den bekannten Prozessen der Rekristallisation von SiC mit einem Verwachsen der Kristalle gerechnet werden musste. Tatsächlich bleibt jedoch die im Wesentlichen pulverförmige Struktur der Produkte des erfindungsgemäßen Verfahrens erhalten. Dabei liegen die Pulverpartikel entweder als vereinzelte Primärkristalle und - kristallite, d.h. ohne Verbindung miteinander vor, oder leicht verwachsen als Sekundärkristallite, d.h. als Verbindung von einzelnen, wenigen miteinander verwachsenen Primärkristallen oder -kristalliten vor. Die Größe der Sekundärkristallite beträgt dabei höchstens den Faktor 10 in Bezug auf die größte im Sekundärkristallit vorhandene Einzelkristallitgröße. Unter Kristalliten werden Einzelkörner verstanden, die bezüglich ihrer Kristallstruktur homogen sind, in ihrer äußeren Form die Kristallstruktur nicht oder nur teilweise aufweisen.

Mit dem erfindungsgemäßen Verfahren kann eine Vergröberung der Partikel, als d₅₀-Wert einer Partikelgrößenverteilung gemessen mittels Laserbeugung von mindesten Faktor 10, bis zu Faktor 50, bezogen auf den d₅₀ Wert des unbehandelten Pulvers, erreicht werden.

Der Prozess des SiC-Partikelwachstum kann dabei in bekannter Art und Weise über die Parameter der thermischen Behandlung, wie Temperatur, Verweilzeit, Gasart und Gasdruck, gesteuert und durch den Fachmann durch wenige Versuche leicht ermittelt werden.

Zur Förderung des Partikelwachstums können dem Ausgangspulver an sich bekannte Additive zugesetzt werden, wie z.B. SiO₂ oder eisenhaltige Stoffe und Verbindungen. Das SiO₂ kann auch durch eine Oxidation des SiC vorhanden sein. Die Restschlämme aus Si-Bearbeitungsprozessen enthalten in den meisten Fällen neben dem SiC auch Si als Waferabrieb, metallische Verunreinigungen des Sägedrahtabriebs und auch Reste von Filterhilfsmitteln. Diese Pulverbestandteile können erfindungsgemäß positiv wirken, da sie das Partikelwachstum fördern können.
Auch andere SiC-Abfallprodukte können Bestandteile, wie Silicium, Siliciumoxid, und Kohlenstoff, sowie metallische Verunreinigungen, wie Fe, Cr und Al in Anteilen von < 5 Ma.-% enthalten, die ebenfalls als Additive das Partikelwachstum fördern.

Bei den sogenannten Koppelprodukten aus industriellen Si-Wafersägeprozessen kann je nach Drahtverschleiß aber auch ein relativ hoher Anteil von metallischen Verunreinigungen, insbesondere von Fe von deutlich > 5 Ma% enthalten sein. Hier ist es vorteilhaft, eine Verringerung des Eisengehaltes oder auch anderer metallischer Komponenten durch Vorbehandlung des Koppelproduktes mit Säuren, wie Schwefelsäure, Salzsäure oder Oxalsäure, auf Werte von insgesamt < 5 Ma% zu reduzieren.

Enthalten die Ausgangspulver keinen Kohlenstoff, so ist es vorteilhaft, Kohlenstoffpartikel in Form von Ruß oder Kokspulver zuzugeben.
Eine solche Zugabe kann vorteilhafterweise einen 0,3- bis 0,5-fachen Gewichtsanteil an Kohlenstoff, bezogen auf den freien Si-Gehalt und/oder den Si-Gehalt des SiO₂ betragen.

Mit dem erfindungsgemäßen Verfahren sollen SiC-Pulver hergestellt werden, die für High-Tech-Anwendungen in HQ-Qualität einsetzbar sind, und die mit hoher Ausbeute mit einem einfachen und wirtschaftlichen Verfahren herstellbar sind.
Die eingesetzten pulverförmigen SiC-Abfallprodukte können nahezu vollständig wiederaufgearbeitet und in den Produktkreislauf wieder eingefügt werden.

Die grundlegende Idee beruht im Wesentlichen darauf, mit einem thermisch induzierten Wachstum der SiC-Körner eine echte Recyclingfähigkeit des verschlissenen SiC-Korns zu erreichen; und zwar unter Ausnutzung der grundlegenden Möglichkeit, SiC-Kristalle über einen Sublimations/Rekondensationsprozess bei hohen Temperaturen wachsen zu lassen. Während dieses Prinzip zur Herstellung von RSiC-Keramik bereits seit langem genutzt wird, ist die Anwendung zur Vergröberung von Pulvern und mit dem Ziel einer Bereitstellung von hochqualitativen Pulvern bisher nicht bekannt.
Für den Fall des Restschlamm-SiC kann das reichlich vorhandene Si und SiO₂ mit einem Kohlenstoff-Zusatz gleichzeitig zu SiC-Partikeln umgewandelt werden, so dass im Idealfall ein 100% SiC-Produkt erreicht wird.

Für die weitere Verwendung können die erfindungsgemäß hergestellten Pulver aber auch weiteren typischen Verfahrensschritten der Aufbereitung unterzogen werden, wie speziellen Zerkleinerungs-, Fraktionierungs- und Reinigungsverfahren. Das wird z.B. der Fall sein, wenn aus den erfindungsgemäß hergestellten Primärkristallen und -kristalliten feinere Partikel gebrochen werden sollen, um eine Partikelgrößenverteilung zu erzeugen, die zwischen dem des Abfallproduktes und dem erfindungsgemäß hergestellten Produkt liegt.
Für die Wiederverwendung als Sägepulver für das Si-Wafersägen können die erfindungsmäßig hergestellten SiC-Pulver vorteilhafterweise zerkleinert und klassiert und den typischen üblichen Partikelgrößen von z.B. d₅₀ von 11,3 - 12,3 µm angepasst werden.
Die für das Sägeverhalten wichtige Morphologie der Partikel wird vor allem durch den sogenannten Zirkularitätswert charakterisiert, der ein Maß für die Kornform darstellt. Hierbei wird eine bestimmte Anzahl Partikel fotografiert und das Verhältnis Kreisumfang eines Kreises mit Partikelfläche zu Partikelumfang bestimmt (z.B. mit dem Gerät Sysmex FPIA 3000 der Fa. Malvern). Die Zirkularitätswerte originaler, d.h. primärer, frischer Pulver aus dem Achesonprozess mit einer besonders guten Sägeleistung weisen typischerweise einen Zirkularitätswert von 0,905 bis 0,915 auf. Bei erfindungsgemäß hergestellten SiC-Pulver wurde nach der Aufmahlung und Klassierung ein Zirkularitätswert von 0,911 gemessen. Die Partikel weisen also im Wesentlichen eine scharfe Morphologie auf und können daher ohne weitere Behandlungen wieder zum Sägen von Siliciumwafern mit hoher Qualität eingesetzt werden.

Ein weitere wichtiger Qualitätswert zur Bewertung der SiC-Pulver für Anwendungen beim Sägen und Schleifen stellt der sogenannte Härtetest oder Friatest dar. Dieser Test wird typischerweise mit dem Gerät Friability Tester ST1 der Firma Vollstädt Diamant durchgeführt. Dabei wird eine bestimmte Menge eines SiC-Pulvers einer definierten Zerkleinerungswirkung durch Stahlkugeln unterzogen und anschließend die Reduktion des d₅₀-Wertes charakterisiert. Eine geringere Reduktion bedeutet dabei ein widerstandsfähigeres Korn. Mit dem erfindungsgemäß hergestellten SiC-Pulver werden Reduktionen des d₅₀-Wertes von 48 %, besonders vorteilhaft jedoch nur 41 - 43 % erreicht, während primär hergestelltes, frisches SiC-Pulver gleicher Ausgangskorngrößenverteilung aus dem Achesonprozess eine Reduktion des d₅₀-Wertes von 49-52 % aufweist. Hierdurch zeigt sich, dass durch das erfindungsgemäße Verfahren sogar eine gegen Zerkleinerung widerstandsfähigere SiC-Qualität erreicht wird, als mit dem originalen Acheson-Prozess.

Nachfolgend wird die Erfindung an einem Ausführungsbeispiel näher erläutert.

### Beispiel 1

10 kg eines getrockneten Schleifschlammpulvers, enthaltend 85 % SiC, 12 % Silicium, 2,5 % SiO₂ und 0,5 % Fe werden in einer Trommelmühle trocken mit 0,5 kg Kokspulver gemischt. Die Pulvermischung weist eine mittels Laserbeugung bestimmte mittlere Korngröße d₅₀ von 2 µm auf. Die Reindichte der Pulvermischung, bestimmt mittels He-Pyknometrie, beträgt 2,98 g/cm³. Die Pulvermischung wird lose in Grafittiegel mit Innendurchmesser 250 mm und Höhe 50 mm gefüllt und mit einem Rakel glatt abgezogen. Die Füllmenge beträgt ca. 1,84 kg je Tiegel, was einer Schüttdichte von 0,75 g/cm³ entspricht, d.h. ca. 25,2 % der Reindichte. Die Tiegel werden in einem Schutzgasofen unter Argonatmosphäre mit 10 K/min bis auf 2500°C aufgeheizt und bei 2500°C über 120 min gehalten.

Nach Abkühlung liegt der Tiegelinhalt als Pulver vor und wird aus den Tiegeln entnommen. Es besteht zu 99,5% aus Siliciumcarbid. Die mittels Laserbeugung bestimmte mittlere Partikelgröße d₅₀ liegt bei ca. 90 µm, d.h. um den Faktor 45 im Vergleich zu Ausgangspulverfeinheit vergröbert. Die mikroskopische Untersuchung zeigt, dass das Pulver zum überwiegenden Teil aus Primärkristallen und -kristalliten einer Größe zwischen 30 und 120 µm besteht. wobei diese sowohl lose vorliegen, als auch teilweise miteinander zu sekundären Partikeln verwachsen sind, die aber die Größe von ca. 200 µm nicht überschreiten.

## Patentansprüche

1. Verfahren zum Recycling von pulverförmigen Siliciumcarbid-Abfallprodukten, bei dem pulverförmige SiC-Abfallprodukte, die sogenanntes Restschlamm-SiC aus Si-Bearbeitungsprozessen, Schleifschlämme, Schleifstäube aus Oberflächenbearbeitungsprozessen, oder feinkörnige Fraktionen aus dem Herstellungsprozess von Roh-SiC sind, und die mindestens 50 Ma.-% SiC und eine mittlere Korngrößen d₅₀, gemessen über Laserbeugung, zwischen 0,5 bis 500 µm aufweisen, einer Temperaturbehandlung unter Vakuum oder sauerstofffreier Atmosphäre bei Temperaturen zwischen 2000 °C bis 2600 °C unterzogen werden.

2. Verfahren nach Anspruch 1, bei dem die Temperaturbehandlung unter Argon- oder Stickstoffatmosphäre durchgeführt wird.

3. Verfahren nach Anspruch 1, bei dem die pulverförmigen SiC-Abfallprodukte bei der Temperatur von mindestens 2000 °C zwischen 10 und 300 min ausgesetzt werden.

4. Verfahren nach Anspruch 1, bei dem pulverförmige SiC-Abfallprodukte als Schüttung oder verdichtetes Pulver eingesetzt werden, die eine prozentuale Dichte, bezogen auf die Reindichte des Pulvers oder der Pulvermischung, von maximal 50 %, vorzugsweise zwischen 20 und 50 %, noch vorteilhafterweise zwischen 25 und 40 %, aufweisen.

5. Verfahren nach Anspruch 1, bei dem bekannte Hilfs- und Zusatzstoffe zur SiC-Rekristallisation zugegeben werden.

6. Verfahren nach Anspruch 5, bei dem als Hilfs- und Zusatzstoff Eisen, Eisenverbindungen und/oder Eisenlegierungen in Anteilen von 0,25 - 5,00 Ma.-% Eisen, bezogen auf die Gesamtmenge an SiC und Si und C, zugegeben werden.

7. Verfahren nach Anspruch 1, bei dem den pulverförmigen SiC-Abfallprodukten der 0,3 bis 0,5 fache Gewichtsanteil an Kohlenstoff, bezogen auf den freien Si-Gehalt und/oder den Si-Gehalt des SiO₂, zugegeben wird.

8. Verfahren nach Anspruch 7, bei dem der Kohlenstoff in Form von Ruß oder Kokspulver zugegeben wird.

## Claims

1. Process for recycling pulverulent silicon carbide waste products, wherein pulverulent SiC waste products which are residual sludge SiC from Si machining processes, grinding sludges, grinding dusts from surface machining processes or fine fractions from the process for producing crude SiC and comprise at least 50% by mass of SiC and have average particle sizes D₅₀ measured by laser light scattering in the range from 0.5 to 500 µm are subjected to a heat treatment under reduced pressure or an oxygen-free atmosphere at temperatures in the range from 2000°C to 2600°C.

2. Process according to Claim 1, wherein the heat treatment is carried out under an argon or nitrogen atmosphere.

3. Process according to Claim 1, wherein the pulverulent SiC waste products are subjected to the temperature of at least 2000°C for from 10 to 300 minutes.

4. Process according to Claim 1, wherein pulverulent SiC waste products are used as bed or compacted powder which have a percentage density based on the pure density of the powder or of the powder mixture of not more than 50%, preferably in the range from 20 to 50%, more advantageously in the range from 25 to 40%.

5. Process according to Claim 1, wherein known auxiliaries and additives for SiC recrystallization are added.

6. Process according to Claim 5, wherein iron, iron compounds and/or iron alloys are added in proportions of 0.25-5.00% by mass of iron, based on the total amount of SiC and Si and C, as auxiliary and additive.

7. Process according to Claim 1, wherein the pulverulent SiC waste products are admixed with the from 0.3 to 0.5 fold proportion by weight of carbon, based on the free Si content and/or the Si content of the SiO₂.

8. Process according to Claim 7, wherein the carbon is added in the form of carbon black or coke powder.

## Revendications

1. Procédé de recyclage de déchets pulvérulents de carbure de silicium, selon lequel des déchets pulvérulents de SiC, qui sont ladite boue résiduelle de SiC issue de procédés de traitement de Si, des boues de meulage, des poussières de meulage issues de procédés de traitement de surface, ou des fractions à grains fins issues du procédé de fabrication de SiC brut, et qui contiennent au moins 50 % en masse de SiC et présentent une taille de particule moyenne d₅₀, mesurée par diffraction laser, comprise entre 0,5 et 500 µm, sont soumis à un traitement thermique sous vide ou sous une atmosphère exempte d'oxygène à des températures comprises entre 2 000 °C et 2 600 °C.

2. Procédé selon la revendication 1, selon lequel le traitement thermique est réalisé sous une atmosphère d'argon ou d'azote.

3. Procédé selon la revendication 1, selon lequel les déchets pulvérulents de SiC sont exposés à la température d'au moins 2 000 °C pendant une durée comprise entre 10 et 300 minutes.

4. Procédé selon la revendication 1, selon lequel les déchets pulvérulents de SiC sont utilisés en vrac ou sous la forme d'une poudre compactée, qui présente une densité exprimée en pourcentage, par rapport à la densité réelle de la poudre ou du mélange de poudre, d'au plus 50 %, de préférence comprise entre 20 et 50 %, de manière encore davantage préférée entre 25 et 40 %.

5. Procédé selon la revendication 1, selon lequel des adjuvants et additifs connus sont ajoutés à la recristallisation de SiC.

6. Procédé selon la revendication 5, selon lequel du fer, des composés de fer et/ou des alliages de fer en proportions de 0,25 à 5,00 % en masse de fer, par rapport à la quantité totale de SiC et de Si et C, sont ajoutés en tant qu'adjuvants et additifs.

7. Procédé selon la revendication 1, selon lequel du carbone est ajouté aux déchets pulvérulents de SiC en une proportion en poids de 0,3 à 0,5 fois la teneur en Si libre et/ou la teneur en Si du SiO₂.

8. Procédé selon la revendication 7, selon lequel le carbone est ajouté sous la forme de noir de carbone ou de poudre de coke.
